# EUROPEAN PATENT APPLICATION

(11) **EP 2 026 438 A1**
(43) Date of publication of application: **18.02.2009**
(21) Application number: 08156888.3
(22) Date of filing: 26.05.2008
(51) Int. Cl.: H02G 15/064, H02G 15/103

(54) **A cable connection electric field control device, and a cable connection arrangement provided therewith**

(71) Applicant: ABB Research LTD, 8050 Zurich (CH)
(72) Inventor: Gäfvert, Uno, 723 49, VästerÅs (SE); Papazyan, Ruslan, 722 15, VÄSTERÅS (SE); Saltzer, Markus, 5400, Baden (CH); Svahn, Jörgen, 441 35, AlingsÅs (SE); Jonsson, Erik, 7020, Trondheim (NO); Palmqvist, Lars, 441 30, Alingsås (SE); Ming, Li, 723 41, Västerås (SE)
(74) Representative: Dahlstrand, Björn

(57) **Abstract**

A cable connection electric field control device (2) comprising: an electrically insulating body (9) comprising an electrically insulating material; and a field-grading layer (10) embedded in said body (9). The field-grading layer (10) field grading layer (10) comprises a thickening (11) along a part thereof.

## Description

### TECHNICAL FIELD

The present invention relates to a cable connection electric field control device comprising an electrically insulating body comprising an electrically insulating material, and a field-grading layer at least partly embedded in said body.

The invention also relates to a cable connection arrangement comprising an electric power cable, said cable comprising a conductor and electric insulation, and a semiconducting layer, and a connection element to which an end of the conductor is connected, wherein said semiconducting layer ends at a predetermined distance from said connection element, and wherein the connection arrangement comprises an electric field control device enclosing the cable at least in the region of the end of the semiconducting layer.

Typically, but not necessarily, the electric field control device according to the invention forms part of a bushing, a cable termination or a cable joint. Preferably, the inventive field control device is of the resistive field control type. A field-grading layer is referred to as a layer comprising a material the electric conductivity of which depends of the strength of an electric field to which it is subjected. Thus, it may be referred to as a layer comprising a material with non-linear IV characteristics.

Preferably, the cable connection, as well as the inventive field control device, is adapted to medium voltage applications, wherein medium voltage is referred to as voltages of above 1 kV and up to approximately 36 kV. It is, however, conceived that the invention may also be applicable to high voltage applications, i.e. above 36 kV.

### BACKGROUND OF THE INVENTION

Resistive/refractive stress-graded terminations of the slip-over type are well known. Having the shape of a flexible sleeve, they have the advantage of being easy to apply to a prepared end of a cable. Typically, a prepared end of a cable is peeled such that the electric insulation layer and semiconducting layer thereof are both exposed.

The stress-graded terminations of prior art has a stress-grading layer molded into a body of silicon rubber, defining the stress distribution along the termination, together with the local stray capacitance inside the cable. The length of the stress-grading layer, its distribution of resistivity and its dielectric constant are selected to provide a linear-voltage distribution outside of the termination at elevated stresses. At higher frequencies, the coupling between the resistance of the stress-grading layer and the stray capacitance results in a high electric-field strength near the edge of the outer semiconducting layer of the cable and will generate hot spots in that region. The problem is further increased in case the edge or extreme end of the semiconducting layer is of irregular or uneven shape, which may often be the case since peeling might be performed on-site. Said conditions with higher frequencies may, for instance, exist in contemporary converter-based transmission controllers that use Gate Turn Off switching components such as IGBT's or motor drives. Fast switching components like IGBT's may generate high frequency voltages which are superimposed upon the power frequency (50/60 Hz) voltage. The high frequency may, under special circumstances, cause insulation damages at voltage magnitudes that are well below the dielectric voltage withstand of the insulation at power frequency.

When subjected to medium and high voltage of high frequencies, the stress graded terminations of prior art will result in local high losses, which in its turn will result in local high temperatures. This will in its turn result in the creation of local voids in the termination and, finally to partial discharges therein and electric breakdown.

In order to cope with this situation caused by the use of fast switching components a geometric type of termination not considered to be frequency-dependent below the megahertz range, may be used to replace the stress graded terminations of the resistive field-grading type. This type of termination is a classical design and generally used for high- and extra-high voltages, although it also can be used for medium-voltage applications. The electrical-field distribution is determined only by the stray capacitance in the cable and in the termination itself. Because there is no resistive grading interacting with the capacitances, voltage distribution is mainly independent of frequency, with highest field strength occurring inside the homogeneous high-quality EPDM (Ethylene Propylene Diene Monomer) insulation used for the terminations. The geometric type of termination has a larger cross-section than the resistive type and requires more space for its installation. Accordingly, at least for medium voltage applications, it would still be preferred to make use of a termination of the resistive field-grading type, provided that the high frequency sensitivity of the latter type of termination could be improved.

### THE OBJECT OF THE INVENTION

It is an object of the present invention to present a cable connection electric field control device as initially defined, which, when compared to corresponding field control devices of resistive field grading type of prior art, presents an improved field distribution and is less prone to a generation of hot spots and electric breakdown when subjected to high voltage in combination with high frequencies. Accordingly, the invention aims at improving prior art control devices of the resistive field grading type.

### SUMMARY OF THE INVENTION

The object of the invention is achieved by means of the initially defined cable connection electric field control device, characterised in that said field grading layer comprises a thickening along a part thereof. If, for example, a cable onto which the field control device of the invention is to be mounted comprises any region that might be prone to induce a concentration of an electric field, the part along which the thickening of the field grading layer is provided may be positioned opposite to such a region, in order to counteract such concentration of the electric field. Typically, such a region is the end, or edge, of an exposed semiconducting layer of the cable. The field grading layer will then have the dual function of distributing evenly the electric field along the length of the field control device at high stresses, and decreasing locally the stress at the edge of the semiconducting layer. Along the remaining part of the field grading layer, the part which is thinner than the thickened part, the thickness of the field grading layer is not excessive with regard to its functionality, thereby contributing to a slim and compact design of the field control device.

According to one embodiment said electric field control device has a tubular shape, wherein said thickening extends in a circumferential direction around the device. Typically, a region such as the edge of a semiconducting layer of a cable onto which the field control device is to be mounted will extend circumferentially around the cable. Accordingly, a corresponding circumferential extension of the thickened part of the field grading layer will contribute to a better stress relief along such a region.

Preferably said thickening extends continuously in the circumferential direction of the device. Thereby, a total coverage of a circumferential region of the cable as described above may be achieved, resulting in more perfect stress relief.

According to one embodiment at the thickness of the thickening is at least 1,5 times, preferably 2 times the thickness of a neighbouring part of the field grading layer. The thickening may have a rounded shape, defining a bulge or the like on the field grading layer. A typical field control device may have a tubular electrical insulating body, the wall thickness of which, at least along a major part the field grading layer, is larger than the thickness of the latter. In the region of the thickening of the field grading layer, the thickness of the insulating body may be reduced to a corresponding degree such that the dimension of the outer periphery thereof, remains the same as at neighbouring parts thereof that encloses parts of the field grading layer that are adjacent the thickening thereof. Except for longitudinal part of the device along which said thickening is provided the thickness of the insulating body is a plurality of the thickness of the field grading layer.

According to one embodiment the field control device is characterised in that said part along which the thickening is provided is arranged so as to be opposite to an end of a semiconducting layer of a cable connected to the field control device when said device is in its operative position. Opposite will, typically, mean outside the end of the semiconducting layer in a radial direction.

Preferably said part along which the thickening is provided is exposed to an interior space of said field control device arranged to receive a cable enclosed by said device. In other words said part forms the inner surface or inner periphery of the field control device. Thereby, the field grading layer, and the part carrying the thickening, may be applied close to or directly in contact with any region of a cable introduced therein that might be prone to electric field stress concentration. Preferably, the field grading layer is to bear directly against the end of the an exposed semiconducting layer of a cable onto which the field control device is to be mounted in its operative position.

The object of the invention is also achieved by means of the initially defined cable connection arrangement, characterised in that said electric field control device is an electric field control device according to the invention. The design of the field control device and the positioning thereof is particularly advantageous for those cases when the edge or end of the semiconducting layer of the cable is uneven, rough or irregular. Accordingly, the invention particularly includes such embodiments.

According to a preferred embodiment said electric field control device overlaps said semiconducting layer in the longitudinal direction of the cable, wherein said thickening is opposite to an end of the semiconducting layer. The advantages achieved as a result thereof has already been presented with reference to the presentation of the field control device. The thickening will have a certain extension in the longitudinal direction of the cable, and may be shaped like rounded bulge. It is preferred that the point at which the thickening presents it largest thickness value is straight radially outside the end tip or edge of the semiconducting layer. It may be preferred that the thickening extends in a generally symmetric fashion on opposite longitudinal sides of the end tip of the semiconducting layer that it overlaps.

It is preferred that said field grading layer is electrically connected to said semiconducting layer of the cable.

It is also preferred that the part along which thickening is provided bears against an exposed end of the semiconducting layer of the cable.

Further features and advantages of the present invention will be disclosed in the following detailed description thereof.

### BRIEF DESCRIPTION OF THE DRAWINGS

Preferred embodiments of the invention will now be described, by way of reference, to the annexed drawing, on which:
Fig. 1 is a cross-section of a cable connection arrangement provided with an electric field control device according to the invention,
Fig. 2 is a detailed view, showing an alternative embodiment of the inventive electric field control device,
Fig. 3 is a view corresponding to that of fig. 1, but showing a cable connection arrangement of prior art.

### DETAILED DESCRIPTION OF THE INVENTION

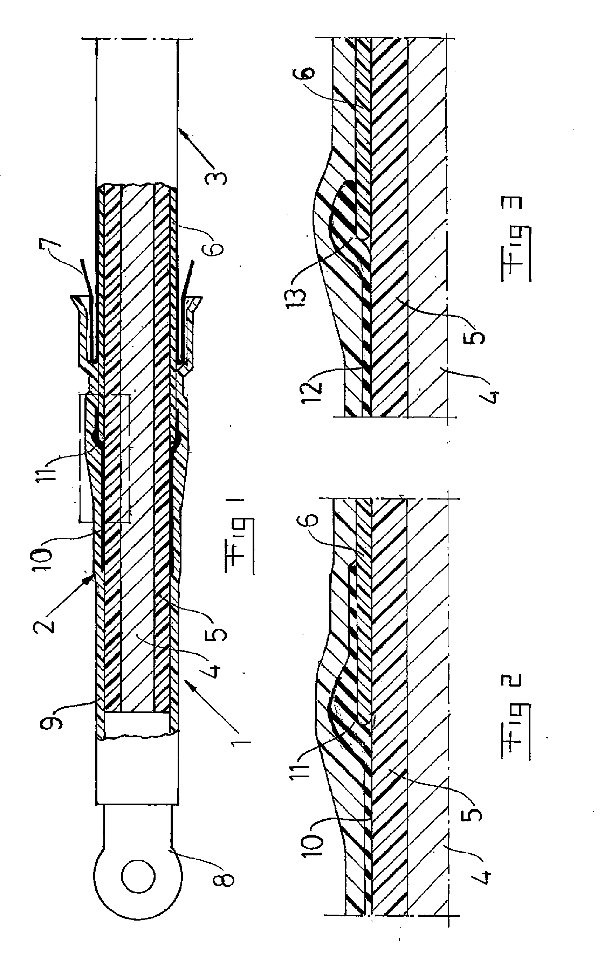

Fig. 1 shows a cable connection arrangement 1 according to the invention. The shown connection arrangement 1 is provided with a cable connection electric field control device 2 according to the invention, here designed as a medium voltage cable termination of the slip over type, SOT (trade name used by ABB). The termination has the shape of a flexible sleeve adapted to be slipped onto the end of an electric power cable. However, it should be understood that the features of the field control device 2 that will be described with reference to this specific application, i.e. a termination, are also valid for other applications, such as bushings, cable joints and fuse canisters.

The cable connection arrangement 1 comprises a cable 3 with a central electric conductor 4 and a tubular electric insulation 5 that encloses the conductor 4. Further, the cable 3 comprises a semiconducting layer 6 applied as a tubular layer outside the electric insulation 4 as seen in a radial direction of the cable 3. Outside the semiconducting layer 6 there is a provided a screen 7, preferably a metal. Preferably, the screen 7 is connected to ground (not shown), and presents ground potential.

In one end thereof, the conductor 4 is connected to a connection element 8, which might be any further electric power transmission equipment, as is well known within this field of technology.

At different predetermined distances from the region in which the conductor 4 meets the connection element 8 and is electrically connected thereto, the semiconducting layer 6 and the screen 7 end, thereby leaving an end part of the semiconducting layer 6 as well as the electric insulation 5 of the cable 3 exposed from outside. The field control device 2 is positioned on the outside of the end of the cable 3 such that it overlaps the electric insulation 5, an end of the semiconducting layer 6 and an end region of the screen 7. Preferably, the field control device 2 is slipped onto the cable. Preferably, there is also provided a layer (not shown) of a void-filling material such as a silicon grease on the part of the cable 3 on which the field control device is to be applied. Accordingly, the interface between the cable and the termination is filled with a high-quality silicon grease to avoid cavities that could lead to partial discharges. For outdoor use, the termination is provided with integrated sheds.

The field control device 2 comprises a tubular body 9 of an electrically insulating material, preferably an elastomer such as EPDM or a silicone rubber. The control device 2 further comprises a tubular field-grading layer 10 embedded in said body 9. The electrically insulating body 9 is a tubular body, and the field-grading layer 10 is moulded into and thereby embedded in the insulating body 9. Thereby, the field grading layer 10 has its inner peripheral surface in alignment with a surrounding inner peripheral surface of the insulating body 9, and faces the electric insulation 6 of the cable 3 and the exposed end part of the semiconducting layer 6. The field grading layer 10 is made of a resistive field grading material presenting non-linear IV-characteristics. Typical field grading materials that form the field grading layer 10 may be silicone rubber or EPDM filled with semiconducting material particles having an energy bandgap larger than 0 eV and smaller than 5 eV, preferably ZnO or SiC. The semiconducting material constitute less than 40% by volume of the field grading material, preferably less than 30% by volume and most preferably less than 20% by volume of the field grading material.

The field grading layer 10 is in direct contact with the end of the semiconducting layer 6 of the cable 3. In a region radially outside the tip or edge of the semiconducting layer 6 the field grading layer 10 presents a thickening 11, i.e. a part having an increased wall thickness in relation to the adjacent parts of the field grading layer 10. The thickening 11 is formed by a circumferentially continuous bulge that will locally decrease the electric stress around the edge of the semiconducting layer. The thickening 11 has a rounded shape, and its maximum dimension in the radial direction, i.e. the thickness direction, is approximately twice the wall thickness of the remaining parts of the field grading layer 10.

The length of the stress-grading layer 10 in the longitudinal direction of the device, its distribution of resistivity and its dielectric constant are selected to provide a linear-voltage distribution along the termination at power frequencies, as well as at higher frequencies. By means of the suggested design, an elevated electric-field strength in the region of the edge of semiconducting layer 6 of the cable 3 is avoided.

Figs. 1 and 2 show an embodiment in which the field grading layer 10 presents neighboring parts of smaller wall thickness on opposite sides of the thickening 11. Fig. 3 shows an alternative embodiment in which the field grading layer 12 has a thickening 13 that forms the end of the field grading layer.

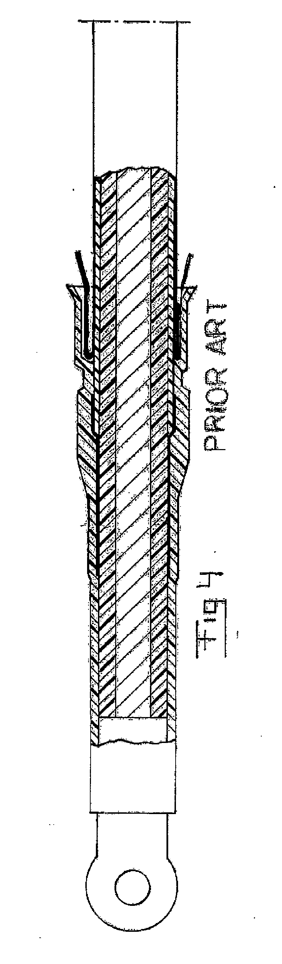

Fig. 4 shows an example of prior art, in which there is provided a stress-grading layer that has the same wall thickness along all its length as seen in the longitudinal direction of the field control device and the cable 3. This kind of design is more prone to result in hot spot generation and breakdown of the electric insulation 6 of the cable in comparison to the embodiments of the invention shown in figs. 1-3 when subjected to medium or high voltage in combination with elevated frequencies, mainly because there is no specific measure taken with regard to the increased stress conditions appearing in the region of the end of the semiconducting layer of the cable.

The invention is particularly advantageous in applications in which cable connections provided with the kind of resistive field grading devices described are connected to voltage sourced converter-based transmission controllers, in particular such ones that use gate turn off switching components and that introduce a high voltage stress on the materials. Accordingly, the invention also includes that the cable connection of the invention be connected to such a transmission controller. Such a controller may include an IGBT-based valve or any corresponding device that operates with pulse width modulation switching technique. On and off switching will create harmonic distortions with frequencies of an order corresponding to the switching frequency, that may stress some insulation systems of prior art excessively and eventually cause failures. However, the present invention presents a conceptual design that contributes to the prevention of such failures.

## Claims

1. A cable connection electric field control device (2) comprising
- an electrically insulating body (9) comprising an electrically insulating material,
- a field-grading layer (10, 12) at least partly embedded in said body (9), **characterised in that** said field grading layer (10, 12) comprises a thickening (11, 13) along a part thereof.

2. A cable connection electric field control device according to claim 1, **characterised in that** said electric field control device (2) has a tubular shape and that said thickening (11, 13) extends in a circumferential direction around the device.

3. A cable connection electric field device according to claim 2, **characterised in that** said thickening (11, 13) extends continuously in the circumferential direction of the device.

4. A cable connection electric field control device according to any of claims 1-3, **characterised in that** at the thickness of the thickening (11, 13) is at least 1,5 times the thickness of a neighbouring part of the field grading layer.

5. A cable connection electric field control device according to any one of claims 1-4, **characterised in that** said part along which the thickening (11, 13) is provided is arranged so as to be opposite to an end of a semiconducting layer (6) of a cable (3) connected to the field control device (2) when said device (2) is in its operative position.

6. A cable connection electric field control device according to any one of claims 1-5, **characterised in that** said part along which the thickening (11, 13) is provided is exposed to an interior space of said field control device (2) arranged to receive a cable (3) enclosed by said device (2).

7. A cable connection electric field control device according to any one of claims 1-6, **characterised in that** it forms a part of a cable termination.

8. A cable connection electric field control device according to any one of claims 1-6, **characterised in that** it forms a part of a cable joint

9. A cable connection electric field control device according to any one of claims 1-6, **characterised in that** it forms a part of a electric bushing.

10. A cable connection arrangement (1) comprising an electric power cable (3), said cable (3) comprising
- a conductor (4),
- an electric insulation (5) and
- a semiconducting layer (6),
and a connection element (8) to which an end of the conductor (4) is connected, wherein said semiconducting layer (6) ends at a predetermined distance from said connection element (8), and wherein the connection arrangement comprises an electric field control device (2) enclosing the cable (3) at least in the region of the end of the semiconducting layer (6), **characterised in that** said electric field control device (2) is an electric field control device according to any one of claims 1-7.

11. A cable connection arrangement (1) according to claim 10, **characterised in that** said electric field control device (2) overlaps said semiconducting layer (6) in the longitudinal direction of the cable (3), wherein said thickening (11, 13) is opposite to an end of the semiconducting layer (6).

12. A cable connection arrangement (1)according to claim 10 or 11, **characterised in that** said field grading layer is electrically connected to said semiconducting layer (6) of the cable (3).

13. A cable connection arrangement (1) according to any one of claims 10-12, **characterised in that** the part along which thickening (11, 13) is provided bears against an exposed end of the semiconducting layer of the cable.
